# FASCICULE DE BREVET EUROPEEN

(11) **EP 1 468 894 B1**
(45) Date de publication et mention de la délivrance du brevet: **05.07.2006**
(21) Numéro de dépôt: 04290998.6
(22) Date de dépôt: 14.04.2004
(51) Int. Cl.: B62D 1/16

(54) **Ensemble de direction à fréquence propre de vibration accrue et véhicule automobile correspondant**
Lenkeinrichtung mit erhöhter Vibrationseigenfrequenz und entprechendes Fahrzeug
Steering assembly with increased natural vibration frequency and corresponding vehicle

(30) Priorité: 18.04.2003 FR 0304892
(43) Date de publication de la demande: 20.10.2004
(73) Titulaire: Faurecia Systèmes de Direction, 92000 Nanterre (FR)
(72) Inventeur: Lidoine, Eric, 25700 Mathay (FR)
(74) Mandataire: Domenego, Bertrand

(56) Documents cités:
- DE-A- 19 737 036
- US-A- 3 769 851

## Description

La présente invention concerne un ensemble de direction selon le préambule de la revendication 1.

Un ensemble de ce type est connu de US- 3 769 851.

L'invention s'applique, en particulier, aux ensembles de direction dont l'inclinaison de la colonne de direction peut être modifiée, grâce aux moyens de liaison entre le support et le corps de colonne, afin de régler la hauteur du volant.

On connaît des ensembles de direction du type précité dans lesquels les moyens avant et arrière de fixation comprennent quatre boulons de serrage du support de colonne de direction sur la caisse. Ces boulons sont disposés aux quatre coins du support.

Les constructeurs de véhicules automobiles imposent aux équipementiers de fournir des ensembles de direction dont la fréquence propre de vibration, une fois qu'ils sont montés dans les véhicules automobiles, est élevée, afin que les conducteurs ne ressentent pas trop fortement les vibrations engendrées par le fonctionnement des véhicules.

Pour augmenter cette fréquence propre, il est possible de rigidifier le support de colonne de direction en augmentant la quantité de matériau utilisée pour le réaliser. Pour éviter une augmentation trop importante de la masse, on a songé à remplacer l'acier utilisé pour constituer de tels supports par de l'aluminium. Toutefois, cela induirait une augmentation importante du coût de ces supports.

Un but de l'invention est de résoudre ce problème en fournissant un ensemble de direction du type précité qui présente une fréquence propre de vibration plus élevée une fois monté dans un véhicule automobile, tout en étant de masse et de coût faibles.

A cet effet, l'invention a pour objet un ensemble de direction selon la revendication 1.

Selon des modes particuliers de réalisation, l'ensemble de direction peut comprendre l'une ou plusieurs des caractéristiques des revendications 2 à 8.

L'invention a également pour objet un véhicule automobile selon la revendication 9.

L'invention sera mieux comprise à la lecture de la description qui va suivre, donnée uniquement à titre d'exemple, et faite en se référant aux dessins annexés, sur lesquels :
- la figure 1 est une vue partielle, schématique et en coupe latérale d'un véhicule automobile selon l'invention, et
- la figure 2 est une vue en perspective illustrant le corps et le support de la colonne de direction du véhicule de la figure 1.

Dans tout ce qui suit, les orientations utilisées sont les orientations habituelles d'un véhicule automobile. Ainsi, les termes « avant », « arrière », « haut » et « bas » s'entendent par rapport à la position d'un conducteur et au sens de marche du véhicule automobile.

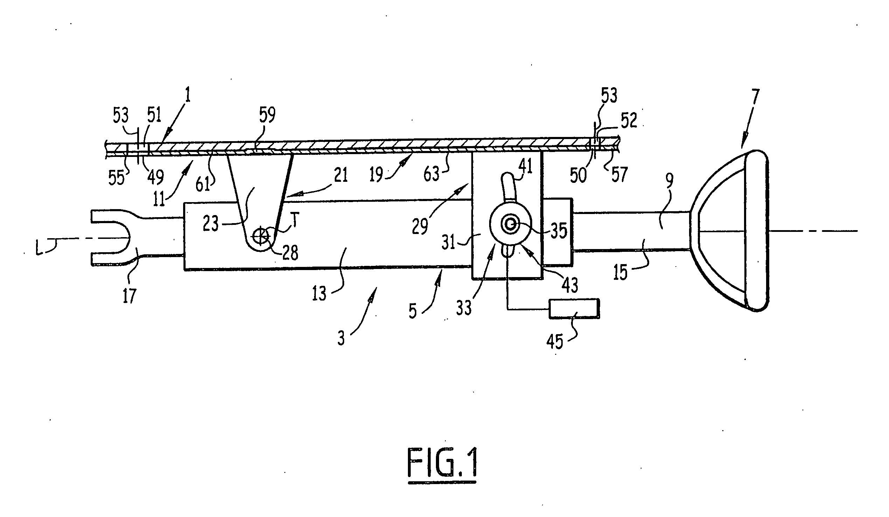

La figure 1 illustre partiellement un véhicule automobile qui comprend une caisse 1 et un ensemble de direction 3 monté sur la caisse 1.

Seule une partie de la caisse 1 a été représentée, mais celle-ci possède une structure classique.

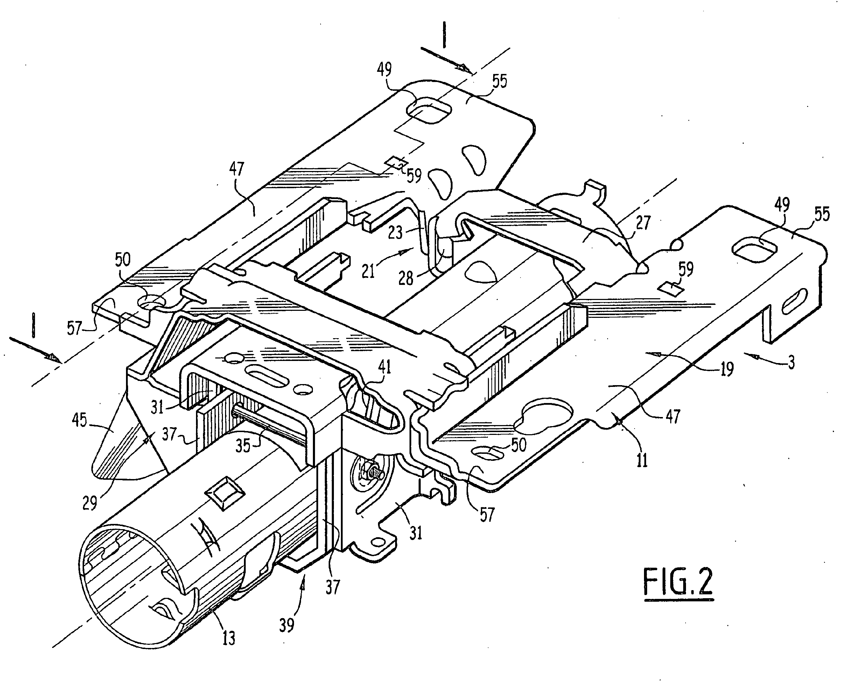

Comme illustré par les figures 1 et 2, l'ensemble de direction 3 comprend principalement :
- une colonne de direction 5,
- un volant de direction 7 fixé à l'extrémité arrière 9 de la colonne 5, et
- un support de colonne 11.

La colonne de direction 5 comprend de manière classique un corps de colonne 13 et un arbre de direction 15 qui est monté rotatif dans le corps 13 autour de son axe longitudinal L. L'extrémité arrière de l'arbre de direction 15 forme l'extrémité arrière 9 de la colonne de direction 13 sur laquelle le volant 7 est fixé. Cette fixation est assurée classiquement par l'intermédiaire du moyeu central du volant 7.

L'extrémité avant de l'arbre de direction 15 est reliée au reste du mécanisme de direction (non-représenté), par exemple grâce à une fourche de cardan 17.

Le support 11 comprend une platine 19 de montage sur la caisse 1 et des moyens de liaison à la colonne de direction 5.

Plus précisément, le support 11 comprend des moyens avant 21 de liaison qui comprennent deux flasques 23 qui prolongent la platine 19 vers le bas et qui sont disposés de part et d'autre du corps de colonne 13. Un collier 27 solidaire du corps de colonne 13 est articulé à ces flasques 23 par deux pivots 28. Le collier 27 est uniquement représenté sur la figure 2.

Ainsi, les moyens avant 21 de liaison permettent au corps de colonne 13 et donc à la colonne 5 de pivoter par rapport au support 11 autour d'un axe transversal T.

Le support 11 comprend également des moyens arrière 29 de liaison qui comprennent deux brides 31 qui prolongent également la platine 19 vers le bas. Ces brides 31 sont disposées de part et d'autre du corps de colonne 13.

Les moyens arrière 29 de liaison comprennent en outre un dispositif 33 de blocage en position de la colonne de direction 5. Ce dispositif 33 est par exemple un dispositif classique comprenant un tirant 35 qui s'étend transversalement en passant au travers de branches 37 d'un étrier 39 solidaire du corps de colonne 13. Cet étrier 39 est visible sur la figure 2 mais n'a pas été représenté sur la figure 1. Le tirant 35 est en outre reçu dans des fentes de guidage 41 ménagées dans les brides 31.

Le dispositif de blocage 33 comprend également un mécanisme de verrouillage 43 à billes ou à cames, commandé par une poignée 45. Un tel mécanisme 43 est classique.

Dans l'exemple représenté, ce mécanisme 43 est appuyé sur la face latérale extérieure de la bride 31 gauche.

De manière classique, la poignée 45 permet de déplacer le mécanisme 43 entre une position verrouillée et une position déverrouillée. En position verrouillée, le mécanisme 43 a provoqué le rapprochement des deux brides 31 qui enserrent entre elles l'étrier 39 et empêche ainsi le pivotement du corps 13 et de la colonne de direction 5 autour de l'axe transversal T. La colonne 5 est alors bloquée en position.

En position déverrouillée, les brides 31 sont écartées et l'étrier 39 et donc le corps de colonne 5 peuvent se déplacer entre les brides 31. Ainsi, il est possible, grâce aux pivots 28 et au guidage du tirant 35 dans les fentes 41 des brides 31, de modifier l'inclinaison de la colonne de direction 5 et donc la position du volant de direction 7. Un tel réglage de la position de la colonne de direction 5 et du volant 7 est qualifié généralement de réglage en hauteur.

Une fois la position désirée atteinte, on manoeuvre la poignée 45 pour ramener le mécanisme 43 en position verrouillée et ainsi bloquer la colonne 5 dans la position désirée.

Comme illustré par la figure 2, la platine 19 du support 11 comprend deux ailes latérales 47 disposées de part et d'autre de la colonne de direction 5. Les ailes 47 comprennent chacune une découpe avant 49 et une découpe arrière 50. Des découpes 50 et 52 sont ménagées en regard dans la caisse 1 et des boulons de serrage, matérialisés par des traits mixtes 53 sur la figure 1, sont reçus dans les découpes 49 et 51, et respectivement 50 et 52.

La platine 19 est ainsi serrée par les boulons 53 sur la caisse 1. La platine 19 comprend donc au voisinage des découpes 49 et 50, des régions avant 55 et arrière 57 qui sont appuyées sous contrainte contre la caisse 1.

Entre les découpes 49 et 50, chaque aile 47 comprend un embouti 59. Cet embouti 59 fait saillie vers le haut et donc vers la caisse 1 par rapport à l'aile latérale 47 considérée. On notera que les dimensions de l'embouti 59 ont été exagérées sur la figure 1 dont le plan de coupe I-I est visible sur la figure 2. De même, l'épaisseur de la caisse 1 est localement réduite sur la figure 1, pour faciliter la représentation de l'embouti 59, mais la caisse 1 ne comporte en fait pas d'évidement ou d'épaisseur réduite à cet emplacement.

On notera que les emboutis 59 sont disposés en regard des pivots 28 et donc des moyens avant 21 de liaison. Autrement dit, les emboutis 59 sont situés longitudinalement au droit des pivots 28.

Du fait du serrage de la platine 19 contre la caisse 1, les emboutis 59 forment des régions intermédiaires d'appui sous contrainte de la platine 19 contre la caisse 1.

Ainsi, chaque aile latérale 47 de la platine 19 s'appuie contre la caisse 1 en trois régions espacées longitudinalement l'une de l'autre.

Lors du fonctionnement du véhicule automobile et même en présence de vibrations, la platine 19 reste appuyée contre la caisse 1 dans les régions avant 55, dans les régions intermédiaires 59 et dans les régions arrière 57. Les régions 61 et 63 des ailes latérales 47 situées entre les régions 55 et 57 et la région intermédiaire 59 forment des ventres de vibration. Cela signifie qu'en présence de vibrations engendrées par le fonctionnement du véhicule automobile, ces régions 61 et 63 sont susceptibles de s'éloigner légèrement de la caisse 1.

Toutefois, les longueurs de ces régions 61 et 63 étant réduites, la fréquence propre de vibration de l'ensemble de direction 3 est élevée. Ainsi, les régions intermédiaires d'appui 59 augmentent la rigidité de l'ensemble de direction 3 et sa fréquence propre de vibration. On a observé que cet effet est d'autant plus important que les régions intermédiaires d'appui 59 sont situées au droit des pivots 28.

En outre, cette solution s'avère économique et n'entraîne pas d'augmentation de la masse de l'ensemble de direction 3, puisqu'elle peut être tout simplement mise en oeuvre grâce à des emboutis.

Plus généralement, les principes ci-dessus peuvent s'appliquer à un ensemble de direction 3 qui permet le réglage de la position du volant 7 en hauteur, comme décrit précédemment, et/ou en profondeur, c'est à dire un réglage le long de l'axe longitudinal L.

De préférence, les régions intermédiaires d'appui 59 sont situées en regard de moyens de liaison du support 11 à la colonne de direction 5.

Les régions intermédiaires d'appui 59 peuvent également avoir une structure autre que celle décrite précédemment.

## Revendications

1. Ensemble de direction (3) du type comprenant :
- une colonne de direction (5) comprenant elle-même un arbre de direction (15) et un corps de colonne (13) dans lequel l'arbre de direction (15) est monté rotatif,
- un support (11) de colonne de direction comprenant des moyens (21,29) de liaison au corps de colonne (13), des moyens avant et arrière (53) de fixation du support (11) sur la caisse (1) d'un véhicule, et au moins une région intermédiaire (59) d'appui sur la caisse disposée entre les moyens avant et arrière (53) de fixation,
**caractérisé en ce que** les moyens (21, 29) de liaison au corps de colonne (13) autorisent un déplacement du corps de colonne (13) par rapport au support (11) pour régler la position d'un volant (7) relié à l'arbre de direction, et **en ce que** la région intermédiaire d'appui (59) fait saillie par rapport au support (11) pour être orientée vers la caisse (1).

2. Ensemble de direction selon la revendication 1, **caractérisé en ce que** la région intermédiaire d'appui (59) est disposée en regard d'une partie (21) des moyens de liaison.

3. Ensemble de direction selon la revendication 2, **caractérisé en ce que** les moyens de liaison comprennent au moins un pivot (28) d'inclinaison du corps de colonne (13) par rapport au support (11), et **en ce que** la région intermédiaire d'appui (59) est disposée en regard du pivot (28).

4. Ensemble de direction selon l'une des revendications précédentes, **caractérisé en ce que** la région intermédiaire d'appui (59) comprend un embouti ménagé dans le support (11).

5. Ensemble de direction selon l'une des revendications précédentes, **caractérisé en ce que** les moyens (53) de fixation comprennent des moyens de serrage.

6. Ensemble de direction selon la revendication 5, **caractérisé en ce que** les moyens de fixation comprennent des moyens avant et arrière (53) de serrage.

7. Ensemble de direction selon la revendication 5 ou 6, **caractérisé en ce que** les moyens de serrage comprennent des boulons.

8. Ensemble selon la revendication 7, **caractérisé en ce que** les moyens avant de fixation comprennent des boulons avant (53) et les moyens arrière de fixation comprenant des boulons arrière (53).

9. Véhicule automobile comprenant une caisse (1) et un ensemble de direction (3) monté sur la caisse, **caractérisé en ce que** l'ensemble de direction (3) est un ensemble de direction selon l'une des revendications précédentes.

## Claims

1. Steering assembly (3) of a type which includes:
- a steering column (5) which is itself made up of a steering shaft (15) and a column body (13) in which the steering shaft (15) is fitted so that it rotates,
- a steering column support (11) which includes means (21, 29) of connection to the column body (13), front and rear means (53) of fixing the support (11) onto the body shell (1) of a vehicle and at least one intermediate region (59) for support on the body shell arranged between the front and rear (53) means of fixation,
**characterised by** the fact that the means (21, 29) for connection to the column body (13) allows the column body (13) to move relative to the support (11) in order to adjust the position of a steering wheel (7) connected to the steering shaft, and by the fact that the intermediate support region (59) projects relative to the support (11) so that it may be directed towards the body shell (1).

2. Steering assembly as described in claim 1, **characterised by** the fact that the intermediate support region (59) is arranged opposite one part (21) of the means of connection.

3. Steering assembly as described in claim 2, **characterised by** the fact that the means of connection includes at least one pivot (28) for tilting the column body (13) relative to the support (11), and by the fact that the intermediate support region (59) is arranged opposite the pivot (28).

4. Steering assembly as described in any of the preceding claims, **characterised by** the fact that the intermediate support region (59) includes a cup packing made in the support (11).

5. Steering assembly as described in any of the preceding claims, **characterised by** the fact that the means (53) of fixation includes means of clamping.

6. Steering assembly as described in claim 5, **characterised by** the fact that the means of fixation includes front and rear (53) means of clamping.

7. Steering assembly as described in claims 5 or 6, **characterised by** the fact that the means of clamping includes bolts.

8. Assembly as described in claim 7, **characterised by** the fact that the front means of fixation are made up of the front bolts (53) and the rear means of fixation which includes the rear bolts (53).

9. Automotive vehicle including of a body shell (1) and a steering assembly (3) fitted to the body shell, **characterised by** the fact that the steering assembly (3) is a steering assembly as described in any of the preceding claims.

## Patentansprüche

1. Lenkvorrichtung (3) der Art mit:
- einer Lenksäule (5), welche selbst eine Lenkwelle (15) und einen Säulenkörper (13) aufweist, in welchem die Lenkwelle (15) drehbar gelagert ist,
- einem Träger (11) für die Lenksäule mit Vorrichtungen (21, 28) zur Verbindung mit dem Säulenkörper (13), vorderen und hinteren Vorrichtungen (53) zur Befestigung des Trägers (11) an dem Gehäuse (1) eines Fahrzeugs, und zumindest einem Zwischenbereich (59) zur Auflage auf dem Gehäuse, welcher zwischen den vorderen und hinteren Befestigungsvorrichtungen (53) angeordnet ist,
**dadurch gekennzeichnet, dass** die Vorrichtungen (21, 29) zur Verbindung mit dem Säulenkörper (13) eine Verschiebung des Säulenkörpers (13) gegenüber dem Träger (11) zulassen, um die Position eines mit der Lenkwelle verbundenen Lenkrades (7) einzustellen, und dass der Auflagezwischenbereich (59) bezüglich des Trägers (11) vorspringt, um zu dem Gehäuse (1) hin ausgerichtet zu sein.

2. Lenkvorrichtung gemäß Anspruch 1, **dadurch gekennzeichnet, dass** der Auflagezwischenbereich (59) einem Teil (21) der Verbindungsvorrichtungen gegenüberliegend angeordnet ist.

3. Lenkvorrichtung gemäß Anspruch 2, **dadurch gekennzeichnet, dass** die Verbindungsvorrichtungen zumindest einen Gelenkzapfen (28) zur Neigung des Säulenkörpers (13) bezüglich des Trägers (11) aufweisen, und dass der Auflagezwischenbereich (59) dem Gelenkzapfen (28) gegenüberliegend angeordnet ist.

4. Lenkvorrichtung gemäß einem der vorherigen Ansprüche, **dadurch gekennzeichnet, dass** der Auflagezwischenbereich (59) einen in dem Träger (11) ausgebildeten Stulp aufweist.

5. Lenkvorrichtung gemäß einem der vorherigen Ansprüche, **dadurch gekennzeichnet, dass** die Befestigungsvorrichtungen (53) Festspannvorrichtungen aufweisen.

6. Lenkvorrichtung gemäß Anspruch 5, **dadurch gekennzeichnet, dass** die Befestigungsvorrichtungen vordere und hintere Festspannvorrichtungen (53) aufweisen.

7. Lenkvorrichtung gemäß Anspruch 5 oder 6, **dadurch gekennzeichnet, dass** die Festspannvorrichtungen Bolzen aufweisen.

8. Lenkvorrichtung gemäß Anspruch 7, **dadurch gekennzeichnet, dass** die vorderen Befestigungsvorrichtungen vordere Bolzen (53) aufweisen und die hinteren Befestigungsvorrichtungen hintere Bolzen (53) aufweisen.

9. Kraftfahrzeug mit einem Gehäuse (1) und einer an dem Gehäuse angebrachten Lenkvorrichtung (3), **dadurch gekennzeichnet, dass** die Lenkvorrichtung (3) eine Lenkvorrichtung gemäß einem der vorherigen Ansprüche ist.
